# EUROPEAN PATENT APPLICATION

(11) **EP 4 615 049 A1**
(43) Date of publication of application: **10.09.2025**
(21) Application number: 23884780.0
(22) Date of filing: 27.10.2023
(51) Int. Cl.: H04W 28/12

(54) **COMMON PUCCH REPEATED TRANSMISSION METHOD, TERMINAL, AND NETWORK SIDE DEVICE**

(30) Priority: 04.11.2022 CN 202211379847
(71) Applicant: Vivo Mobile Communication Co., Ltd., Dongguan, Guangdong 523863 (CN)
(72) Inventor: WANG, Yong, Dongguan, Guangdong 523863 (CN); LIN, Zhipeng, Dongguan, Guangdong 523863 (CN); CAI, Jiansheng, Dongguan, Guangdong 523863 (CN)
(74) Representative: Shieldmark
(86) International application number: PCT/CN2023/127310
(87) International publication number: WO 2024/093848

(57) **Abstract**

This application pertains to the field of communication technologies, and discloses a method for common PUCCH transmission with repetitions, a terminal, and a network-side device. The method for common PUCCH transmission with repetitions in embodiments of this application includes: obtaining, by a terminal, first indication information of common PUCCH transmission with repetitions, where the first indication information is used to indicate at least one of the following: the number of repetitions, a counting method for the number of repetitions, a frequency hopping mode, and a frequency domain offset between two hops; and performing, by the terminal, the common PUCCH transmission with repetitions based on the first indication information.

## Description

### CROSS-REFERENCE TO RELATED APPLICATIONS

This application claims priority to Chinese Patent Application No. 202211379847.6, filed in China on November 4, 2022, which is incorporated herein by reference in its entirety.

### TECHNICAL FIELD

This application pertains to the field of communication technologies, and specifically relates to a method for common PUCCH transmission with repetitions, a terminal, and a network-side device.

### BACKGROUND

In a case that no dedicated (dedicated) physical uplink control channel (Physical Uplink Control Channel, PUCCH) resource is assigned, a terminal can use only common (common) PUCCH resources. In some scenarios such as a non-terrestrial network (Non-Terrestrial Network, NTN) scenario, for example, a PUCCH used for Msg4 hybrid automatic repeat request (Hybrid Automatic Repeat Request, HARQ) feedback, if reception performance cannot meet a requirement, random access cannot be completed, and consequently, transmission on all service channels (for example, a voice over new radio NR (Voice over NR, VoNR) service or low-speed data transmission) cannot be further completed. PUCCH transmission with repetitions is usually used to resolve a coverage problem of the PUCCH. However, currently, the PUCCH transmission with repetitions is not supported on common PUCCH resources. Therefore, it is urgent to implement a method for PUCCH transmission with repetitions on common PUCCH resources.

### SUMMARY

Embodiments of this application provide a method for common PUCCH transmission with repetitions, a terminal, and a network-side device, to resolve a problem of how to implement PUCCH transmission with repetitions on common PUCCH resources.

According to a first aspect, a method for common PUCCH transmission with repetitions is provided and includes:
obtaining, by a terminal, first indication information of common PUCCH transmission with repetitions, where the first indication information is used to indicate at least one of the following: the number of repetitions, a counting method for the number of repetitions, a frequency hopping mode, and a frequency domain offset between two hops; and
performing, by the terminal, the common PUCCH transmission with repetitions based on the first indication information.

According to a second aspect, a method for common PUCCH transmission with repetitions is provided and includes:
sending, by a network-side device, first indication information of common PUCCH transmission with repetitions to a terminal, where the first indication information is used to indicate at least one of the following: the number of repetitions, a counting method for the number of repetitions, a frequency hopping mode, and a frequency domain offset between two hops.

According to a third aspect, an apparatus for common PUCCH transmission with repetitions is provided and includes:
an obtaining module, configured to obtain first indication information of common PUCCH transmission with repetitions, where the first indication information is used to indicate at least one of the following: the number of repetitions, a counting method for the number of repetitions, a frequency hopping mode, and a frequency domain offset between two hops; and
a processing module, configured to perform the common PUCCH transmission with repetitions based on the first indication information.

According to a fourth aspect, an apparatus for common PUCCH transmission with repetitions is provided and includes:
a sending module, configured to send first indication information of common PUCCH transmission with repetitions to a terminal, where the first indication information is used to indicate at least one of the following: the number of repetitions, a counting method for the number of repetitions, a frequency hopping mode, and a frequency domain offset between two hops.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The communication interface is configured to obtain first indication information of common PUCCH transmission with repetitions, where the first indication information is used to indicate at least one of the following: the number of repetitions, a counting method for the number of repetitions, a frequency hopping mode, and a frequency domain offset between two hops. The processor is configured to perform the common PUCCH transmission with repetitions based on the first indication information.

According to a seventh aspect, a network-side device is provided. The network-side device includes a processor and a memory. The memory stores a program or instructions capable of running on the processor. When the program or instructions are executed by the processor, the steps of the method according to the second aspect are implemented.

According to an eighth aspect, a network-side device is provided and includes a processor and a communication interface. The communication interface is configured to send first indication information of common PUCCH transmission with repetitions to a terminal, where the first indication information is used to indicate at least one of the following: the number of repetitions, a counting method for the number of repetitions, a frequency hopping mode, and a frequency domain offset between two hops.

According to a ninth aspect, a communication system is provided and includes a terminal and a network-side device. The terminal may be configured to perform the steps of the method for common PUCCH transmission with repetitions according to the first aspect. The network-side device may be configured to perform the steps of the method for common PUCCH transmission with repetitions according to the second aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the second aspect.

According to a twelfth aspect, a computer program or program product is provided. The computer program or program product is stored in a storage medium. The computer program or program product is executed by at least one processor to implement the steps of the method for common PUCCH transmission with repetitions according to the first aspect or the second aspect.

In the embodiments of this application, the terminal obtains the first indication information of the common PUCCH transmission with repetitions, where the first indication information is used to indicate at least one of the following: the number of repetitions, the counting method for the number of repetitions, the frequency hopping mode, and the frequency domain offset between two hops; and because a mechanism for common PUCCH transmission with repetitions is improved by using the first indication information, the terminal performs the common PUCCH transmission with repetitions based on the first indication information. Therefore, the terminal can better support the transmission with repetitions and frequency hopping based on different repetition counts and different counting methods, thereby improving flexibility and reliability of the common PUCCH transmission with repetitions, and improving a coverage capability.

### BRIEF DESCRIPTION OF DRAWINGS

FIG. 1 is a structural diagram of a wireless communication system to which an embodiment of this application can be applied;
FIG. 2 is a first schematic flowchart of a method for common PUCCH transmission with repetitions according to an embodiment of this application;
FIG. 3 is a first schematic interaction flowchart of a method for common PUCCH transmission with repetitions according to an embodiment of this application;
FIG. 4 is a second schematic flowchart of a method for common PUCCH transmission with repetitions according to an embodiment of this application;
FIG. 5 is a first schematic structural diagram of an apparatus for common PUCCH transmission with repetitions according to an embodiment of this application;
FIG. 6 is a second schematic structural diagram of an apparatus for common PUCCH transmission with repetitions according to an embodiment of this application;
FIG. 7 is a schematic structural diagram of a communication device according to an embodiment of this application;
FIG. 8 is a schematic structural diagram of a terminal according to an embodiment of this application; and
FIG. 9 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

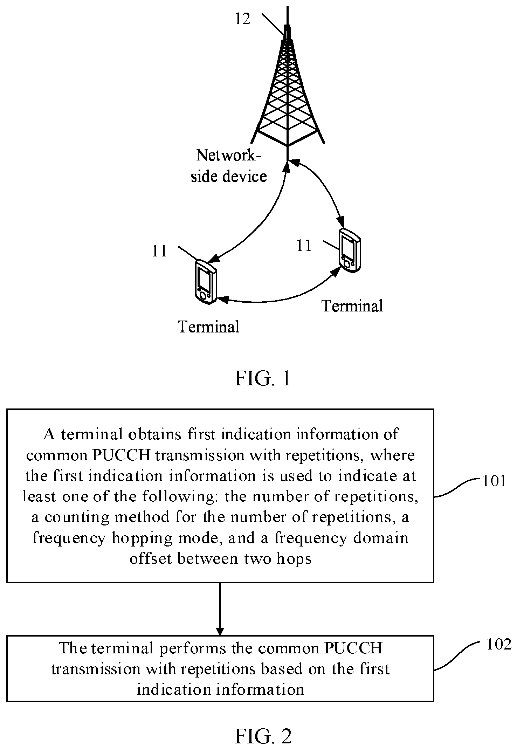

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

The following first describes related concepts in the embodiments of this application.

Common PUCCH transmission with repetitions (repetitions) refers to PUCCH transmission with repetitions performed on common (Common) PUCCH resources, and may be PUCCH transmission with repetitions for Msg4 HARQ feedback, or may be other PUCCH transmission with repetitions performed when a terminal cannot obtain dedicated PUCCH resources. A PUCCH format (format) used may be a PUCCH format 1 and/or a PUCCH format 0, without excluding other PUCCH formats.

Common PUCCH resources are PUCCH resources configured for multiple users together, or common PUCCH resources configured for each serving cell, which can be used by terminals before dedicated (dedicated) PUCCH resources are configured. A PUCCH on common PUCCH resources is sometimes directly referred as a common PUCCH.

Generally, support for PUCCH transmission with repetitions in time may be used to resolve a coverage problem of the PUCCH on common PUCCH resources. In a mechanism for dedicated (dedicated) PUCCH transmission with repetitions, transmission with repetitions based on available slots (available slots) or transmission with repetitions based on physical slots (physical slots) is supported. Transmission with repetitions based on available slots refers to determining, before the transmission, available slots that can be used for PUCCH transmission with repetitions, to ensure more effective transmission times as much as possible. Similarly, in a mechanism for common PUCCH transmission with repetitions, a counting method based on available slots or transmission with repetitions based on physical slots may also be supported, and transmission with repetitions based on available slots may ensure more effective transmission repetitions, thereby improving a coverage capability. In addition, inter-slot frequency hopping (inter-slot frequency hopping) may also achieve gains through frequency diversity, to improve the coverage capability.

A method for common PUCCH transmission with repetitions according to embodiments of this application is hereinafter described in detail by using some embodiments and application scenarios thereof with reference to the accompanying drawings.

FIG. 2 is a first schematic flowchart of a method for common PUCCH transmission with repetitions according to an embodiment of this application. As shown in FIG. 2, the method provided in this embodiment includes the following steps.

Step 101: A terminal obtains first indication information of common PUCCH transmission with repetitions, where the first indication information is used to indicate at least one of the following: the number of repetitions, a counting method for the number of repetitions, a frequency hopping mode, and a frequency domain offset between two hops.

Specifically, the common PUCCH transmission with repetitions refers to transmission with repetitions performed by using common PUCCH resources before the terminal obtains dedicated PUCCH resources.

The terminal obtains the first indication information of the common PUCCH transmission with repetitions. For example, the first indication information is indication information sent by a network-side device to the terminal.

The number of repetitions refers to the total number of repeated transmission times. For example, if the number of repetitions is 1, transmission is performed only once, or if the number of repetitions is 2, transmission is performed twice. The counting method for the number of repetitions includes, for example, counting the number of repetitions based on available slots, and counting the number of repetitions based on physical slots. Counting the number of repetitions based on available slots means that only available slots are used for common PUCCH transmission with repetitions, and these available slots are counted into the number of repetitions. Counting the number of repetitions based on physical slots means that consecutive physical slots are used for common PUCCH transmission with repetitions, and these consecutive physical slots are all counted into the number of repetitions.

The frequency hopping mode includes an intra-slot frequency hopping mode and an inter-slot frequency hopping mode.

Step 102: The terminal performs the common PUCCH transmission with repetitions based on the first indication information.

Specifically, the terminal performs the common PUCCH transmission with repetitions based on the first indication information. For example, the first indication information indicates that the number of repetitions is 2, and the counting method for the number of repetitions is counting the number of repetitions based on available slots. In other words, the transmission is performed twice by using a common PUCCH, and a slot used in each transmission is an available slot determined before the transmission.

According to the method in this embodiment, the terminal obtains the first indication information of the common PUCCH transmission with repetitions, where the first indication information is used to indicate at least one of the following: the number of repetitions, the counting method for the number of repetitions, the frequency hopping mode, and the frequency domain offset between two hops; and because a mechanism for common PUCCH transmission with repetitions is improved by using the first indication information, the terminal performs the common PUCCH transmission with repetitions based on the first indication information. Therefore, the terminal can better support the transmission with repetitions and frequency hopping based on different repetition counts and different counting methods, thereby improving flexibility and reliability of the common PUCCH transmission with repetitions, and improving a coverage capability.

Optionally, the first indication information is carried in at least one of the following manners:
downlink control information (Downlink Control Information, DCI);
a message Msg2; and
a message Msg4.

Optionally, the DCI is sent in a DCI format 1_0.

Optionally, the DCI format 1_0 mainly includes at least one of the following:
a DCI format 1_0 scrambled by using a random access-radio network temporary identifier (Random Access-Radio Network Temporary Identifier, RA-RNTI);
a DCI format 1_0 scrambled by using a MsgB-radio network temporary identifier (MsgB-Radio Network Temporary Identifier, MsgB-RNTI);
a DCI format 1_0 scrambled by using a cell-radio network temporary identifier (Cell-Radio Network Temporary Identifier, C-RNTI); and
a DCI format 1_0 scrambled by using a temporary cell-radio network temporary identifier (Temporary Cell-Radio Network Temporary Identifier, C-RNTI).

Optionally, the DCI carries the first indication information by using at least one of the following fields:
a modulation and coding scheme (Modulation and Coding Scheme, MCS) field;
a transport block (Transport Block, TB) scaling field;
a new data indicator (New Data Indicator, NDI) field;
a redundancy version (Redundancy Version, RV) field;
a downlink assignment index (Downlink Assignment Index, DAI) field; and
a reserved bits field.

Optionally, in a case that the first indication information is used to indicate the number of repetitions and/or the frequency domain offset, before step 102, the method further includes at least one of the following:
the terminal determines a target number of repetitions from a set of candidate values for the number of repetitions based on the first indication information; and
the terminal determines a target frequency domain offset from a set of candidate values for the frequency domain offset based on the first indication information; and
step 102 may be specifically implemented in the following manner:
   the terminal performs the common PUCCH transmission with repetitions based on the target number of repetitions and/or the target frequency domain offset, where
   the set of candidate values for the number of repetitions and/or the frequency domain offset is indicated in at least one of the following manners:
      radio resource control RRC signaling, system information, or a preconfiguration.

Specifically, the set of candidate values for the number of repetitions, and/or the set of candidate values for the frequency domain offset may be specified in advance, where the set of candidate values for the number of repetitions includes a plurality of candidate values for the number of repetitions, and the set of candidate values for the frequency domain offset includes a plurality of frequency domain offsets. The target number of repetitions and/or the target frequency domain offset may be determined based on the set of candidate values, and further, the common PUCCH transmission with repetitions is performed based on the target number of repetitions and/or the target frequency domain offset.

For example, the set of candidate values for the number of repetitions is {1, 2, 4, 8}, and the target number of repetitions is 2. For example, the set of candidate values for the frequency domain offset is {offset 1, offset 2}, and the target frequency domain offset is offset 1.

In some embodiments, some bits in the MCS field are used to indicate the number of repetitions. For example, two most significant bits are used to indicate the number of repetitions, and the set of candidate values for the number of repetitions is indicated as {1, 2, 4, 8} by using RRC signaling, system information, or a preconfiguration. A specific correspondence is not limited to the following Table 1:

**Table 1**

| Two most significant bits in the MCS field | Number of repetitions (Repetition factor) |
|---|---|
| '00' | 1 |
| '01' | 2 |
| '10' | 4 |
| '11' | 8 |

Optionally, in a case that the first indication information indicates the number of repetitions by using the TB scaling field, the number of repetitions is a function of the scaling factor.

In some embodiments, the TB scaling (scaling) field is used to indicate the number of repetitions. Herein the set of candidate values for the number of repetitions may be indicated by using RRC signaling, system information, or a preconfiguration (for example, the preconfiguration is {1, 2, 4, 8}).

For example, in a case that the set of candidate values for the number of repetitions is {1, 2, 4, 8}, a specific correspondence is not limited to the following Table 2:

**Table 2**

| TB scaling field | Scaling factor (Scaling factor) S | Number of repetitions (Repetition factor) |
|---|---|---|
| '00' | 1 | 1 |
| '01' | 0.5 | 2 |
| '10' | 0.25 | 4 |
| '11' | | 8 |

For another example, the number of repetitions may be a function of the scaling factor. For example, the number of repetitions for the common PUCCH transmission with repetitions is a reciprocal of the scaling factor S, and in a case that S is not defined, the common PUCCH transmission with repetitions is not performed. Currently, the scaling factor supports only the following three values. For example, the number of repetitions can only support {1, 2, 4}.

**Table 3**

| TB scaling field | Scaling factor (Scaling factor) S |
|---|---|
| 00 | 1 |
| 01 | 0.5 |
| 10 | 0.25 |
| 11 | |

Alternatively, the number of repetitions for the common PUCCH transmission with repetitions is 2×(1/S), and in a case that S is not defined, the common PUCCH transmission with repetitions is not performed. The number of repetitions may be {1, 2, 4, 8} respectively corresponding to S= {undefined, 1, 0.5, 0.25}.

The number of repetitions is 1, that is, transmission is performed only once, which is equivalent to no repetition.

In the foregoing implementation, in a case that the TB scaling factor is relatively small, that is, coverage is relatively poor (demodulation performance may be improved by using a relatively small scaling factor), a relatively large number of repetitions for the common PUCCH transmission with repetitions may be configured. This can not only improve transmission reliability, but also reduce signaling overheads.

In some embodiments, an RV field is used to indicate the number of repetitions. For example, if an RV sequence is configured as {0, 0, 0, 0}, it means that an RV sequence corresponding to a PDSCH that carries an Msg4 is {0, 0, 0, 0}, that is, RV0 is always used. The set of candidate values for the number of repetitions is indicated as {1, 2, 4, 8} by using RRC signaling or system information or a preconfiguration, and a specific correspondence is not limited to the following Table 4:

**Table 4**

| RV field | Number of repetitions (Repetition factor) |
|---|---|
| '00' | 1 |
| '01' | 2 |
| '10' | 4 |
| '11' | 8 |

In some embodiments, some bits in the RV field and the NDI field are used together to indicate the number of repetitions. For example, when the RV sequence is configured as {0, 3, 0, 3}, it means that the RV sequence corresponding to the PDSCH that carries the Msg4 is {0, 3, 0, 3}, that is, the RV is either 0 or 3. Therefore, the RV may be determined only by using a least significant bit of the RV field. Therefore, another bit of the RV field may be used to indicate the number of repetitions. For example, if a corresponding HARQ process (process) ID is configured as disabled feedback (disabled feedback) in this case, the NDI field does not need to be used to indicate whether data is newly transmitted or retransmitted, that is, may be used to indicate the number of repetitions. The set of candidate values for the number of repetitions is indicated as {1, 2, 4, 8} by using RRC signaling or system information or a preconfiguration, and a specific correspondence is not limited to the following Table 5:

**Table 5**

| Most significant bit of the RV field + NDI field | Number of repetitions (Repetition factor) |
|---|---|
| '0', '0' | 1 |
| '0', '1' | 2 |
| '1', '0' | 4 |
| '1', '1' | 8 |

In some embodiments, the DAI field is used to indicate the number of repetitions, and the set of candidate values for the number of repetitions is indicated as {1, 2, 4, 8} by using RRC signaling, system information, or a preconfiguration. A specific correspondence is not limited to the following Table 6:

**Table 6**

| DAI field | Number of repetitions (Repetition factor) |
|---|---|
| '00' | 1 |
| '01' | 2 |
| '10' | 4 |
| '11' | 8 |

In some embodiments, when a size of a reserved bits field (Reserved bits) field is not 0 bits, some bits of the reserved bits field are used to indicate the number of repetitions, and the set of candidate values for the number of repetitions is indicated as {1, 2, 4, 8} by using RRC signaling or system information or a preconfiguration. A specific correspondence is not limited to the following Table 7. For example, two least significant bits of the reserved bits field are used to indicate the number of repetitions.

**Table 7**

| Two least significant bits of the reserved bits field | Number of repetitions (Repetition factor) |
|---|---|
| '00' | 1 |
| '01' | 2 |
| '10' | 4 |
| '11' | 8 |

In some embodiments, at least some bits in the MCS field are used to indicate the counting method for the number of repetitions. For example, a most significant bit is used to indicate the counting method for the number of repetitions, where '0' indicates that a counting method for the number of repetitions based on physical slots is used, and '1' indicates that a counting method for the number of repetitions based on available slots is used, or vice versa.

In some embodiments, the NDI field is used to indicate the counting method for the number of repetitions. For example, in a case that a HARQ process ID corresponding to a HARQ process number in the DCI is configured as disabled feedback, the NDI field does not need to be used to indicate whether data is newly transmitted or retransmitted, that is, may be used to indicate the counting method for the number of repetitions. For example, '0' indicates that the counting method for the number of repetitions based on physical slots is used, and '1' indicates that the counting method for the number of repetitions based on available slots is used, or vice versa.

In some embodiments, some bits of the RV field are used to indicate the counting method for the number of repetitions. For example, when the RV sequence is configured as {0, 3, 0, 3}, a most significant bit of the RV field may be used as an indication. For example, '0' indicates that the counting method for the number of repetitions based on physical slots is used, and '1' indicates that the counting method for the number of repetitions based on available slots is used, or vice versa.

Alternatively, when the RV sequence is configured as {0, 0, 0, 0}, a most significant bit or least significant bit of the RV field may be used as an indication. For example, '0' indicates that the counting method for the number of repetitions based on physical slots is used, and '1' indicates that the counting method for the number of repetitions based on available slots is used, or vice versa.

In some embodiments, some bits of the DAI field are used to indicate the counting method for the number of repetitions. For example, a most significant bit or least significant bit of the DAI field may be used as an indication. For example, '0' indicates that the counting method for the number of repetitions based on physical slots is used, and '1' indicates that the counting method for the number of repetitions based on available slots is used, or vice versa.

In some embodiments, when the size of the reserved bits field (Reserved bits) field is not 0 bits, some bits of the reserved bits field are used to indicate the counting method for the number of repetitions. For example, a most significant bit or least significant bit of the reserved bits field may be used as an indication. For example, '0' indicates that the counting method for the number of repetitions based on physical slots is used, and '1' indicates that the counting method for the number of repetitions based on available slots is used, or vice versa.

Optionally, in a case that the first indication information indicates the counting method for the number of repetitions by using the TB scaling field, the counting method for the number of repetitions is a function of the scaling factor.

In some embodiments, for example, in a case that the TB scaling factor is less than 1, it indicates that the counting method for the number of repetitions based on available slots is used; otherwise, it indicates that the counting method for the number of repetitions based on physical slots is used.

In some embodiments, some bits in the MCS field are used to indicate the frequency hopping mode. For example, a most significant bit is used, where '0' indicates that the intra-slot (intra-slot) frequency hopping mode is used, and '1' indicates that the inter-slot (inter-slot) frequency hopping mode is used, or vice versa.

In some embodiments, the NDI field is used to indicate the frequency hopping mode. For example, '0' indicates that the intra-slot frequency hopping mode is used, and '1' indicates that the inter-slot frequency hopping mode is used, or vice versa.

In some embodiments, some bits in the RV field are used to indicate the frequency hopping mode. For example, a most significant bit is used, and in this case, the RV sequence is configured as {0, 0, 0, 0} or {0, 3, 0, 3}; or a least significant bit is used, and this case, the RV sequence is configured as {0, 0, 0, 0}. '0' indicates that the intra-slot frequency hopping mode is used, and '1' indicates that the inter-slot frequency hopping mode is used, or vice versa.

In some embodiments, some bits in the DAI field are used to indicate the frequency hopping mode. For example, '0' indicates that the intra-slot frequency hopping mode is used, and '1' indicates that the inter-slot frequency hopping mode is used, or vice versa.

In some embodiments, when the size of the reserved bits field is not 0 bits, some bits in the reserved bits field are used to indicate the frequency hopping mode. For example, '0' indicates that the intra-slot frequency hopping mode is used, and '1' indicates that the inter-slot frequency hopping mode is used, or vice versa.

In some embodiments, some bits in the MCS field are used to indicate the frequency domain offset between two hops, and the set of candidate values for the frequency domain offset is indicated by using RRC signaling or system information or a preconfiguration; and if there are two candidate values for the frequency domain offset, one bit such as a most significant bit in this field is used to indicate the frequency domain offset; or if there are three or four candidate values for the frequency domain offset, two bits such as two most significant bits in this field are used to indicate the frequency domain offset.

In some embodiments, the NDI field is used to indicate the frequency domain offset between two hops, and the set of candidate values for the frequency domain offset is indicated by using RRC signaling or system information or a preconfiguration. If there are two candidate values for the frequency domain offset, this field is used to indicate the frequency domain offset. If there are three or four candidate values for the frequency domain offset, this field is used together with some bits of another field to indicate the frequency domain offset. For example, it is used together with a most significant bit of the RV field to form two bits that may indicate a frequency domain offset in the candidate set of frequency domain offsets. In this case, the RV sequence may be configured as {0, 0, 0, 0} or {0, 3, 0, 3}.

In some embodiments, some bits in the RV field are used to indicate the frequency domain offset between two hops. If there are two candidate values for the frequency domain offset, one bit such as a most significant bit in this field is used to indicate the frequency domain offset, and the RV sequence may be configured as {0, 0, 0, 0} or {0, 3, 0, 3}; or if there are three or four candidate values for the frequency domain offset, two bits of this field are used to indicate the frequency domain offset, and in this case, the RV sequence may be configured as {0, 0, 0, 0}.

In some embodiments, some bits in the DAI field are used to indicate the frequency domain offset between two hops. If there are two candidate values for the frequency domain offset, one bit such as a most significant bit in this field is used to indicate the frequency domain offset; or if there are three or four candidate values for the frequency domain offset, two bits of this field are used to indicate the frequency domain offset.

In some embodiments, when the size of the reserved bits field is not 0 bits, some bits in the reserved bits field are used to indicate the frequency domain offset between two hops, and the frequency domain offset is indicated by using RRC signaling or system information or a preconfiguration. If there are two candidate values for the frequency domain offset, one bit such as a most significant bit in this field is used to indicate the frequency domain offset; or if there are three or four candidate values for the frequency domain offset, two bits of this field are used to indicate the frequency domain offset.

In the foregoing implementation, at least one field in the DCI is used to indicate the number of repetitions, the counting method for the number of repetitions, the frequency domain offset, and the like. Flexibility is relatively high.

Optionally, for the common PUCCH, whether to perform inter-slot frequency hopping is determined by whether the common PUCCH transmission with repetitions is performed and/or whether the number of repetitions for the common PUCCH transmission with repetitions is greater than 1. Step 102 may be implemented in the following manners:

### Manner 1:

In a case that the first indication information indicates that the frequency hopping mode is the intra-slot frequency hopping mode, and that the number of repetitions indicated by the first indication information is greater than 1, the terminal performs the transmission with repetitions based on the inter-slot frequency hopping mode.

Specifically, the frequency hopping mode is configured as the intra-slot (intra-slot) frequency hopping mode. However, when the number of repetitions is greater than 1, inter-slot frequency hopping is actually performed.

Optionally, the first indication information may not indicate the frequency hopping mode. For example, the terminal is preconfigured to perform frequency hopping by using the intra-slot frequency hopping mode. Alternatively, an indication is provided by RRC signaling or system information.

### Manner 2:

In a case that the terminal supports the common PUCCH transmission with repetitions, and that the number of repetitions indicated by the first indication information is greater than 1, the terminal performs the transmission with repetitions based on the inter-slot frequency hopping mode.

Specifically, in the case that the terminal supports the common PUCCH transmission with repetitions, and that the number of repetitions indicated by the first indication information is greater than 1, the transmission with repetitions may be performed based on the inter-slot frequency hopping mode regardless of whether the first indication information indicates the frequency hopping mode or whether the frequency hopping mode is preconfigured.

Optionally, in a case that the terminal is capable of performing the common PUCCH transmission with repetitions, the terminal is capable of performing frequency hopping by using the inter-slot frequency hopping mode.

Specifically, if the terminal is capable of performing the common PUCCH transmission with repetitions, it means that the terminal is also capable of supporting inter-slot frequency hopping.

In the foregoing implementation, an indirect indication may be used to configure or indicate the common PUCCH transmission with repetitions. Therefore, complexity is relatively low and flexibility is relatively high.

Optionally, the first indication information is indicated by using a random access response (Random Access Response, RAR) uplink grant in the message Msg2.

Optionally, the first indication information is carried in at least one field of the RAR uplink grant:
a modulation and coding scheme MCS field; and
a channel state information (Channel State Information, CSI) request field.

In some embodiments, some bits in the RAR uplink grant (UL grant) are used to indicate the number of repetitions. For example, a most significant bit in the MCS field and the CSI request (request) field are used together to indicate the number of repetitions, and the set of candidate values for the number of repetitions is indicated as {1, 2, 4, 8} by using RRC signaling, system information, or a preconfiguration. A specific correspondence is not limited to the following Table 8:

**Table 8**

| Most significant bit of the MCS field + CSI request field | Number of repetitions (Repetition factor) |
|---|---|
| '0', '0' | 1 |
| '0', '1' | 2 |
| '1', '0' | 4 |
| '1', '1' | 8 |

In some embodiments, at least some bits in the MCS field are used to indicate the counting method for the number of repetitions. For example, a most significant bit is used to indicate the counting method for the number of repetitions, where '0' indicates that the counting method for the number of repetitions based on physical slots is used, and '1' indicates the counting method for the number of repetitions based on available slots is used, or vice versa.

In some embodiments, the CSI request field is used to indicate the counting method for the number of repetitions. For example, '0' indicates that the counting method for the number of repetitions based on physical slots is used, and '1' indicates that the counting method for the number of repetitions based on available slots is used, or vice versa.

Optionally, the method further includes:
the terminal receives indication information that is for enabling the common PUCCH transmission with repetitions and that is sent by a network-side device; and
step 102 may be implemented in the following manner:
   the terminal performs the common PUCCH transmission with repetitions based on the indication information that is for enabling the common PUCCH transmission with repetitions and that is sent by the network-side device and the first indication information.

Specifically, an indication of the number of repetitions, the counting method for the number of repetitions, the frequency hopping mode, or the frequency domain offset may be used only in a case that the network-side device configures enabling of the common PUCCH transmission with repetitions.

Optionally, in a case that the first indication information is used to indicate at least one of the frequency hopping mode and the frequency domain offset between two hops, and that the terminal receives second indication information from a network-side device, the terminal performs the common PUCCH transmission with repetitions by using the frequency hopping mode and/or the frequency domain offset between two hops indicated by the first indication information, where the second indication information is used to indicate enabling of supporting the inter-slot frequency hopping mode for the common PUCCH transmission with repetitions.

Specifically, an indication of the frequency hopping mode or the frequency domain offset may be used only in a case that the network-side device configures enabling of supporting inter-slot frequency hopping for the common PUCCH transmission with repetitions.

It should be noted that a sequence of delivering the first indication information and the second indication information is not limited in this embodiment of this application.

In some embodiments, some bits in the MCS field are used to indicate the frequency domain offset between two hops. If there are two candidate values for the frequency domain offset, one bit such as a most significant bit in this field is used to indicate the frequency domain offset; or if there are three or four candidate values for the frequency domain offset, two bits such as two most significant bits in this field are used to indicate the frequency domain offset.

In some embodiments, the CSI request field is used to indicate the frequency domain offset between two hops, or the CSI request field and the MCS field are used together to indicate the frequency domain offset between two hops, and the set of candidate values for the frequency domain offset is indicated by using RRC signaling or system information or a preconfiguration; and
if there are two candidate values for the frequency domain offset, the CSI request field is used to indicate the frequency domain offset; or
if there are three or four candidate values for the frequency domain offset, some bits (such as most significant bits) in the CSI request field and the MCS field are used together to indicate the frequency domain offset.

In the foregoing implementation, at least one field in the Msg2 is used to indicate the number of repetitions, the counting method for the number of repetitions, the frequency domain offset, and the like. Flexibility is relatively high.

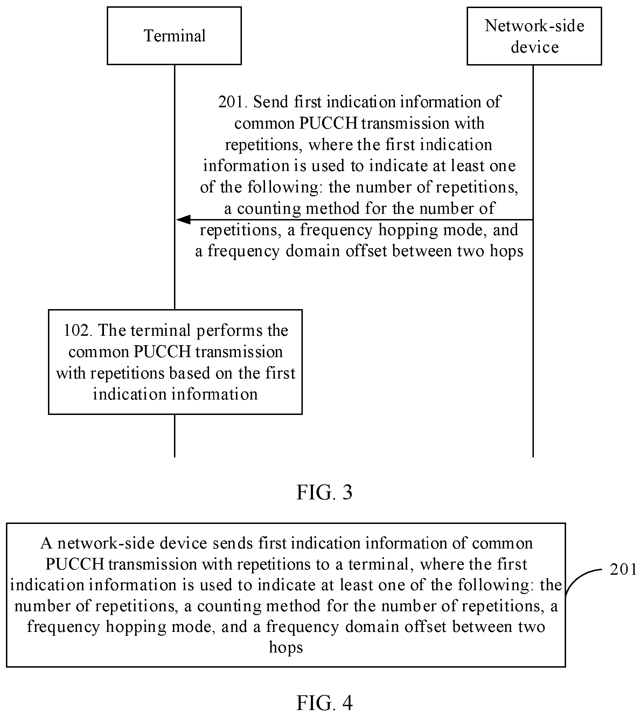

FIG. 4 is a second schematic flowchart of a method for common PUCCH transmission with repetitions according to an embodiment of this application. As shown in FIG. 3 and FIG. 4, the method provided in this embodiment includes the following step.

Step 201: A network-side device sends first indication information of common PUCCH transmission with repetitions to a terminal, where the first indication information is used to indicate at least one of the following: the number of repetitions, a counting method for the number of repetitions, a frequency hopping mode, and a frequency domain offset between two hops.

Optionally, the first indication information is carried in at least one of the following manners:
downlink control information DCI;
a message Msg2; and
a message Msg4.

Optionally, the DCI is sent in a DCI format 1_0.

Optionally, the DCI carries the first indication information by using at least one of the following fields:
a modulation and coding scheme MCS field;
a transport block TB scaling field;
a new data indicator NDI field;
a redundancy version RV field;
a downlink assignment index DAI field; and
a reserved bits field.

Optionally, in a case that the first indication information indicates the number of repetitions or the counting method for the number of repetitions by using the TB scaling field, the number of repetitions or the counting method for the number of repetitions is a function of a scaling factor.

Optionally, the first indication information is indicated by using a random access response RAR uplink grant in the message Msg2.

Optionally, the first indication information is carried in at least one field of the RAR uplink grant content field:
a modulation and coding scheme MCS field; and
a channel state information CSI request field.

Optionally, the method further includes:
the network-side device sends a set of candidate values for the number of repetitions and/or the frequency domain offset to the terminal, where the set of candidate values for the number of repetitions and/or the frequency domain offset is carried in at least one of the following manners:
radio resource control RRC signaling and system information.

Optionally, the method further includes:
the network-side device sends indication information for enabling the common PUCCH transmission with repetitions to the terminal.

Optionally, the method further includes:
the network-side device sends second indication information to the terminal, where the second indication information is used to indicate enabling of supporting an inter-slot frequency hopping mode for the common PUCCH transmission with repetitions.

A specific implementation process and technical effects of the method in this embodiment are similar to those in the terminal-side method embodiment. For details, refer to the detailed descriptions in the terminal-side method embodiment. Details are not described herein.

The method for common PUCCH transmission with repetitions according to the embodiments of this application may be performed by an apparatus for common PUCCH transmission with repetitions. An apparatus for common PUCCH transmission with repetitions according to the embodiments of this application is described by assuming that the method for common PUCCH transmission with repetitions is performed by the apparatus for common PUCCH transmission with repetitions in the embodiments of this application.

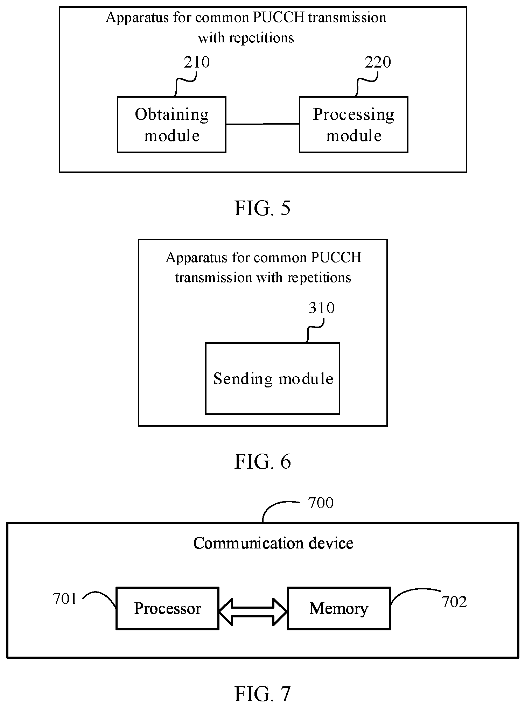

FIG. 5 is a first schematic structural diagram of an apparatus for common PUCCH transmission with repetitions according to this application. As shown in FIG. 5, the apparatus for common PUCCH transmission with repetitions according to this embodiment includes:
an obtaining module 210, configured to obtain first indication information of common PUCCH transmission with repetitions, where the first indication information is used to indicate at least one of the following: the number of repetitions, a counting method for the number of repetitions, a frequency hopping mode, and a frequency domain offset between two hops; and
a processing module 220, configured to perform the common PUCCH transmission with repetitions based on the first indication information.

Optionally, the first indication information is carried in at least one of the following manners:
downlink control information DCI;
a message Msg2; and
a message Msg4.

Optionally, the DCI is sent in a DCI format 1_0.

Optionally, the DCI carries the first indication information by using at least one of the following fields:
a modulation and coding scheme MCS field;
a transport block TB scaling field;
a new data indicator NDI field;
a redundancy version RV field;
a downlink assignment index DAI field; and
a reserved bits field.

Optionally, in a case that the first indication information indicates the number of repetitions or the counting method for the number of repetitions by using the TB scaling field, the number of repetitions or the counting method for the number of repetitions is a function of a scaling factor.

Optionally, the first indication information is indicated by using a random access response RAR uplink grant in the message Msg2.

Optionally, the first indication information is carried in at least one field of the RAR uplink grant:
a modulation and coding scheme MCS field; and
a channel state information CSI request field.

Optionally, the frequency hopping mode includes an intra-slot frequency hopping mode and an inter-slot frequency hopping mode, and the processing module 220 is specifically configured to:
in a case that the first indication information indicates that the frequency hopping mode is the intra-slot frequency hopping mode, and that the number of repetitions indicated by the first indication information is greater than 1, perform the transmission with repetitions based on the inter-slot frequency hopping mode.

Optionally, the frequency hopping mode includes an intra-slot frequency hopping mode and an inter-slot frequency hopping mode, and the processing module 220 is specifically configured to:
in a case that the terminal supports the common PUCCH transmission with repetitions, and that the number of repetitions indicated by the first indication information is greater than 1, perform the repetition based on the inter-slot frequency hopping mode.

Optionally, in a case that the terminal is capable of performing the common PUCCH transmission with repetitions, the terminal is capable of performing frequency hopping by using an inter-slot frequency hopping mode.

Optionally, in a case that the first indication information is used to indicate the number of repetitions and/or the frequency domain offset, the processing module 220 is further configured to perform at least one of the following:
determining a target number of repetitions from a set of candidate values for the number of repetitions based on the first indication information; and
determining a target frequency domain offset from a set of candidate values for the frequency domain offset based on the first indication information; and
the processing module 220 is specifically configured to:
   perform the common PUCCH transmission with repetitions based on the target number of repetitions and/or the target frequency domain offset, where
   the set of candidate values for the number of repetitions and/or the frequency domain offset is indicated in at least one of the following manners:
      radio resource control RRC signaling, system information, or a preconfiguration.

Optionally, the obtaining module 210 is further configured to:
receive indication information that is for enabling the common PUCCH transmission with repetitions and that is sent by a network-side device; and
the processing module 220 is specifically configured to:
   perform the common PUCCH transmission with repetitions based on the indication information that is for enabling the common PUCCH transmission with repetitions and that is sent by the network-side device and the first indication information.

Optionally, the processing module 220 is specifically configured to:
in a case that the first indication information is used to indicate at least one of the frequency hopping mode and the frequency domain offset between two hops, and that the terminal receives second indication information from a network-side device, perform the common PUCCH transmission with repetitions by using the frequency hopping mode and/or the frequency domain offset between two hops indicated by the first indication information, where the second indication information is used to indicate enabling of supporting an inter-slot frequency hopping mode for the common PUCCH transmission with repetitions.

The apparatus in this embodiment may be configured to perform the method in any one of the foregoing terminal-side method embodiments. A specific implementation process and technical effect thereof are similar to those in the terminal-side method embodiment. For details, refer to the detailed descriptions in the terminal-side method embodiment. Details are not described herein again.

FIG. 6 is a second schematic structural diagram of an apparatus for common PUCCH transmission with repetitions according to this application. As shown in FIG. 6, the apparatus for common PUCCH transmission with repetitions according to this embodiment includes:
a sending module 310, configured to send first indication information of common PUCCH transmission with repetitions to a terminal, where the first indication information is used to indicate at least one of the following: the number of repetitions, a counting method for the number of repetitions, a frequency hopping mode, and a frequency domain offset between two hops.

Optionally, the first indication information is carried in at least one of the following manners:
downlink control information DCI;
a message Msg2; and
a message Msg4.

Optionally, the DCI is sent in a DCI format 1_0.

Optionally, the DCI carries the first indication information by using at least one of the following fields:
a modulation and coding scheme MCS field;
a transport block TB scaling field;
a new data indicator NDI field;
a redundancy version RV field;
a downlink assignment index DAI field; and
a reserved bits field.

Optionally, in a case that the first indication information indicates the number of repetitions or the counting method for the number of repetitions by using the TB scaling field, the number of repetitions or the counting method for the number of repetitions is a function of a scaling factor.

Optionally, the first indication information is indicated by using a random access response RAR uplink grant in the message Msg2.

Optionally, the first indication information is carried in at least one field of the RAR uplink grant content field:
a modulation and coding scheme MCS field; and
a channel state information CSI request field.

Optionally, the sending module 310 is further configured to:
send a set of candidate values for the number of repetitions and/or the frequency domain offset to the terminal, where the set of candidate values for the number of repetitions and/or the frequency domain offset is carried in at least one of the following manners:
radio resource control RRC signaling and system information.

Optionally, the sending module 310 is further configured to:
send indication information for enabling the common PUCCH transmission with repetitions to the terminal.

Optionally, the sending module 310 is further configured to:
send second indication information to the terminal, where the second indication information is used to indicate enabling of supporting an inter-slot frequency hopping mode for the common PUCCH transmission with repetitions.

The apparatus in this embodiment may be configured to perform the method in any one of the foregoing network-side method embodiments. A specific implementation process and technical effect thereof are similar to those in the network-side method embodiment. For details, refer to the detailed descriptions in the network-side method embodiment. Details are not described herein again.

The apparatus for common PUCCH transmission with repetitions in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The apparatus for common PUCCH transmission with repetitions according to this embodiment of this application can implement each process implemented by the method embodiments in FIG. 2 to FIG. 4, with the same technical effect achieved. To avoid repetition, details are not described herein again.

Optionally, as shown in FIG. 7, an embodiment of this application further provides a communication device 700, including a processor 701 and a memory 702. The memory 702 stores a program or instructions capable of running on the processor 701. For example, when the communication device 700 is a terminal, and the program or instructions are executed by the processor 701, the steps of the foregoing embodiment of the method for common PUCCH transmission with repetitions are implemented, with the same technical effect achieved. When the communication device 700 is a network-side device, and the program or instructions are executed by the processor 701, the steps of the foregoing embodiment of the method for common PUCCH transmission with repetitions are implemented, with the same technical effect achieved. To avoid repetition, details are not described herein again.

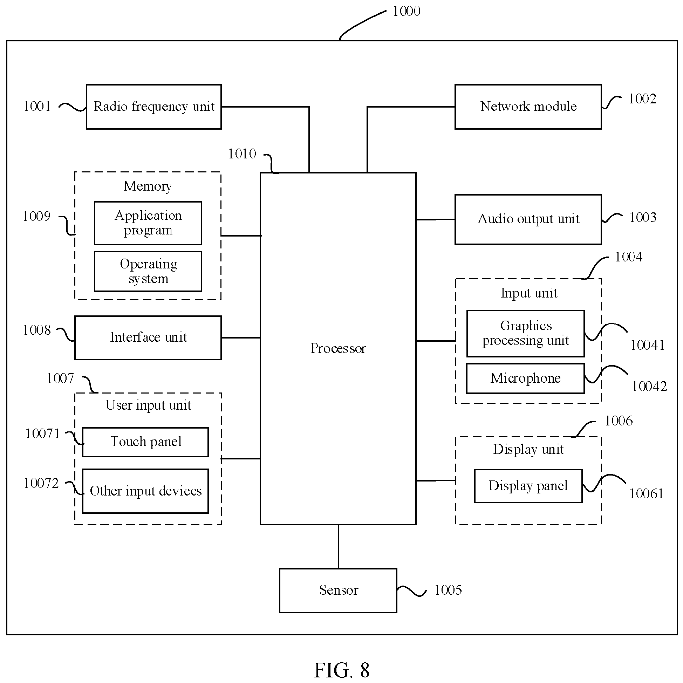

An embodiment of this application further provides a terminal, including a processor and a communication interface, where the communication interface is configured to: obtain first indication information of common PUCCH transmission with repetitions, where the first indication information is used to indicate at least one of the following: the number of repetitions, a counting method for the number of repetitions, a frequency hopping mode, and a frequency domain offset between two hops; and the processor is configured to perform the common PUCCH transmission with repetitions based on the first indication information. The terminal embodiment corresponds to the foregoing terminal-side method embodiment, and each implementation process and implementation of the foregoing method embodiment can be applied to the terminal embodiment, with the same technical effect achieved. Specifically, FIG. 8 is a schematic diagram of a hardware structure of a terminal for implementing an embodiment of this application.

The terminal 1000 includes but is not limited to at least some components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) supplying power to all components. The power supply may be logically connected to the processor 1010 through a power management system. In this way, functions such as charge management, discharge management, and power consumption management are implemented by using the power management system. The terminal structure shown in FIG. 8 does not constitute a limitation on the terminal. The terminal may include more or fewer components than those shown in the figure, or some components are combined, or component arrangements are different. Details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1001 may transmit the downlink data to the processor 1010 for processing. In addition, the radio frequency unit 1001 may send uplink data to the network-side device. Usually, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may primarily include a first storage area for storing programs or instructions and a second storage area for storing data. The first storage area for storing programs or instructions may store an operating system, an application program or instructions required by at least one function (such as an audio play function and an image play function), and the like. In addition, the memory 1009 may include a volatile memory or a non-volatile memory, or the memory 1009 may include both a volatile memory and a non-volatile memory. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1009 in this embodiment of this application includes but is not limited to these and any other suitable types of memories, for example, at least one disk storage device, a flash memory device, or other non-volatile solid-state storage devices.

The processor 1010 may include one or more processing units. Optionally, the processor 1010 may integrate an application processor and a modem processor. The application processor mainly processes operations related to the operating system, a user interface, an application program, instructions, and the like. The modem processor mainly processes a wireless communication signal. For example, the modem processor is a baseband processor. It may be understood that the modem processor may alternatively not be integrated in the processor 1010.

The radio frequency unit 1001 is configured to obtain first indication information of common PUCCH transmission with repetitions, where the first indication information is used to indicate at least one of the following: the number of repetitions, a counting method for the number of repetitions, a frequency hopping mode, and a frequency domain offset between two hops; and
the processor 1010 is configured to perform the common PUCCH transmission with repetitions based on the first indication information.

Optionally, the first indication information is carried in at least one of the following manners:
downlink control information DCI;
a message Msg2; and
a message Msg4.

Optionally, the DCI is sent in a DCI format 1_0.

Optionally, the DCI carries the first indication information by using at least one of the following fields:
a modulation and coding scheme MCS field;
a transport block TB scaling field;
a new data indicator NDI field;
a redundancy version RV field;
a downlink assignment index DAI field; and
a reserved bits field.

Optionally, in a case that the first indication information indicates the number of repetitions or the counting method for the number of repetitions by using the TB scaling field, the number of repetitions or the counting method for the number of repetitions is a function of a scaling factor.

Optionally, the first indication information is indicated by using a random access response RAR uplink grant in the message Msg2.

Optionally, the first indication information is carried in at least one field of the RAR uplink grant:
a modulation and coding scheme MCS field; and
a channel state information CSI request field.

Optionally, the frequency hopping mode includes an intra-slot frequency hopping mode and an inter-slot frequency hopping mode, and the processor 1010 is specifically configured to:
in a case that the first indication information indicates that the frequency hopping mode is the intra-slot frequency hopping mode, and that the number of repetitions indicated by the first indication information is greater than 1, perform the transmission with repetitions based on the inter-slot frequency hopping mode.

Optionally, the frequency hopping mode includes an intra-slot frequency hopping mode and an inter-slot frequency hopping mode, and the processor 1010 is specifically configured to:
in a case that the terminal supports the common PUCCH transmission with repetitions, and that the number of repetitions indicated by the first indication information is greater than 1, perform the transmission with repetitions based on the inter-slot frequency hopping mode.

Optionally, in a case that the terminal is capable of performing the common PUCCH transmission with repetitions, the terminal is capable of performing frequency hopping by using an inter-slot frequency hopping mode.

Optionally, in a case that the first indication information is used to indicate the number of repetitions and/or the frequency domain offset, the processor 1010 is further configured to perform at least one of the following:
determining a target number of repetitions from a set of candidate values for the number of repetitions based on the first indication information; and
determining a target frequency domain offset from a set of candidate values for the frequency domain offset based on the first indication information; and
the processor 1010 is specifically configured to:
   perform the common PUCCH transmission with repetitions based on the target number of repetitions and/or the target frequency domain offset, where
   the set of candidate values for the number of repetitions and/or the frequency domain offset is indicated in at least one of the following manners:
      radio resource control RRC signaling, system information, or a preconfiguration.

Optionally, the radio frequency unit 1001 is further configured to:
receive indication information that is for enabling the common PUCCH transmission with repetitions and that is sent by a network-side device; and
the processor 1010 is specifically configured to:
   perform the common PUCCH transmission with repetitions based on the indication information that is for enabling the common PUCCH transmission with repetitions and that is sent by the network-side device and the first indication information.

Optionally, the processor 1010 is specifically configured to:
in a case that the first indication information is used to indicate at least one of the frequency hopping mode and the frequency domain offset between two hops, and that the terminal receives second indication information from a network-side device, perform the common PUCCH transmission with repetitions by using the frequency hopping mode and/or the frequency domain offset between two hops indicated by the first indication information, where the second indication information is used to indicate enabling of supporting an inter-slot frequency hopping mode for the common PUCCH transmission with repetitions.

An embodiment of this application further provides a network-side device, including a processor and a communication interface, where the communication interface is configured to send first indication information of common PUCCH transmission with repetitions to a terminal, where the first indication information is used to indicate at least one of the following: the number of repetitions, a counting method for the number of repetitions, a frequency hopping mode, and a frequency domain offset between two hops. The network-side device embodiment corresponds to the foregoing method embodiment of the network-side device, and each implementation process and implementation of the foregoing method embodiment can be applied to the network-side device embodiment, with the same technical effect achieved.

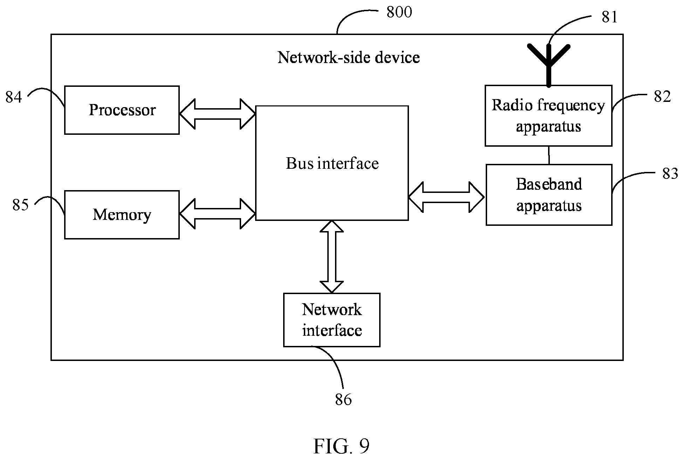

Specifically, an embodiment of this application further provides a network-side device. As shown in FIG. 9, the network-side device 800 includes an antenna 81, a radio frequency apparatus 82, a baseband apparatus 83, a processor 84, and a memory 85.

The antenna 81 is connected to the radio frequency apparatus 82.

In an uplink direction, the radio frequency apparatus 82 receives information by using the antenna 81, and sends the received information to the baseband apparatus 83 for processing.

In a downlink direction, the baseband apparatus 83 processes to-be-sent information, and sends the information to the radio frequency apparatus 82; and the radio frequency apparatus 82 processes the received information and then sends the information out by using the antenna 81.

The radio frequency apparatus may be located in the baseband apparatus 83. The method performed by the access network device in the foregoing embodiment may be implemented in the baseband apparatus 83, and the baseband apparatus 83 includes a processor 84 and a memory 85.

The baseband apparatus 83 may include, for example, at least one baseband unit, where a plurality of chips are disposed on the baseband unit. As shown in FIG. 9, one of the chips is, for example, the baseband processor 84, connected to the memory 85 by using a bus interface, to invoke a program in the memory 85 to perform the operation of the access network device shown in the foregoing method embodiment.

The access network device 800 may further include a network interface 86, configured to exchange information with the radio frequency apparatus 82, where the interface is, for example, a common public radio interface (common public radio interface, CPRI for short).

Specifically, the access network device 800 in this embodiment of this application further includes a program or instructions stored in the memory 85 and capable of running on the processor 84. When the processor 84 invokes the program or instructions in the memory 85, the method performed by the module shown in FIG. 6 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the method for common PUCCH transmission with repetitions is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the method for common PUCCH transmission with repetitions, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the method for common PUCCH transmission with repetitions, with the same technical effect achieved. To avoid repetition, details are not described herein again.

An embodiment of this application further provides a communication system, including a terminal and a network-side device. The terminal may be configured to perform the steps of the foregoing method for common PUCCH transmission with repetitions. The network-side device may be configured to perform the steps of the foregoing method for common PUCCH transmission with repetitions.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A method for common physical uplink control channel PUCCH transmission with repetitions, comprising:
obtaining, by a terminal, first indication information of common PUCCH transmission with repetitions, wherein the first indication information is used to indicate at least one of the following: the number of repetitions, a counting method for the number of repetitions, a frequency hopping mode, and a frequency domain offset between two hops; and
performing, by the terminal, the common PUCCH transmission with repetitions based on the first indication information.

2. The method according to claim 1, wherein
the first indication information is carried in at least one of the following manners:
downlink control information DCI;
a message Msg2; and
a message Msg4.

3. The method according to claim 2, wherein the DCI is sent in a DCI format 1_0.

4. The method according to claim 2 or 3, wherein the DCI carries the first indication information by using at least one of the following fields:
a modulation and coding scheme MCS field;
a transport block TB scaling field;
a new data indicator NDI field;
a redundancy version RV field;
a downlink assignment index DAI field; and
a reserved bits field.

5. The method according to claim 4, wherein
in a case that the first indication information indicates the number of repetitions or the counting method for the number of repetitions by using the TB scaling field, the number of repetitions or the counting method for the number of repetitions is a function of a scaling factor.

6. The method according to claim 2, wherein
the first indication information is indicated by using a random access response RAR uplink grant in the message Msg2.

7. The method according to claim 6, wherein the first indication information is carried in at least one field of the RAR uplink grant:
a modulation and coding scheme MCS field; and
a channel state information CSI request field.

8. The method according to any one of claims 1 to 7, wherein the frequency hopping mode comprises an intra-slot frequency hopping mode and an inter-slot frequency hopping mode, and the performing, by the terminal, the common PUCCH transmission with repetitions based on the first indication information comprises:
in a case that the first indication information indicates that the frequency hopping mode is the intra-slot frequency hopping mode, and that the number of repetitions indicated by the first indication information is greater than 1, performing, by the terminal, the transmission with repetitions based on the inter-slot frequency hopping mode.

9. The method according to any one of claims 1 to 7, wherein the frequency hopping mode comprises an intra-slot frequency hopping mode and an inter-slot frequency hopping mode, and the performing, by the terminal, the common PUCCH transmission with repetitions based on the first indication information comprises:
in a case that the terminal supports the common PUCCH transmission with repetitions, and that the number of repetitions indicated by the first indication information is greater than 1, performing, by the terminal, the transmission with repetitions based on the inter-slot frequency hopping mode.

10. The method according to any one of claims 1 to 7, wherein in a case that the terminal is capable of performing the common PUCCH transmission with repetitions, the terminal is capable of performing frequency hopping by using an inter-slot frequency hopping mode.

11. The method according to any one of claims 1 to 7, wherein in a case that the first indication information is used to indicate the number of repetitions and/or the frequency domain offset, before the performing, by the terminal, the common PUCCH transmission with repetitions based on the first indication information, the method further comprises at least one of the following:
determining, by the terminal, a target number of repetitions from a set of candidate values for the number of repetitions based on the first indication information; and
determining, by the terminal, a target frequency domain offset from a set of candidate values for the frequency domain offset based on the first indication information; and
the performing, by the terminal, the common PUCCH transmission with repetitions based on the first indication information comprises:
performing, by the terminal, the common PUCCH transmission with repetitions based on the target number of repetitions and/or the target frequency domain offset, wherein
the set of candidate values for the number of repetitions and/or the frequency domain offset is indicated in at least one of the following manners:
radio resource control RRC signaling, system information, or a preconfiguration.

12. The method according to any one of claims 1 to 7, wherein the method further comprises:
receiving, by the terminal, indication information that is for enabling the common PUCCH transmission with repetitions and that is sent by a network-side device; and
the performing, by the terminal, the common PUCCH transmission with repetitions based on the first indication information comprises:
performing, by the terminal, the common PUCCH transmission with repetitions based on the indication information that is for enabling the common PUCCH transmission with repetitions and that is sent by the network-side device and the first indication information.

13. The method according to any one of claims 1 to 7, wherein the performing, by the terminal, the common PUCCH transmission with repetitions based on the first indication information comprises:
in a case that the first indication information is used to indicate at least one of the frequency hopping mode and the frequency domain offset between two hops, and that the terminal receives second indication information from a network-side device, performing, by the terminal, the common PUCCH transmission with repetitions by using the frequency hopping mode and/or the frequency domain offset between two hops indicated by the first indication information, wherein the second indication information is used to indicate enabling of supporting an inter-slot frequency hopping mode for the common PUCCH transmission with repetitions.

14. A method for common PUCCH transmission with repetitions, comprising:
sending, by a network-side device, first indication information of common PUCCH transmission with repetitions to a terminal, wherein the first indication information is used to indicate at least one of the following: the number of repetitions, a counting method for the number of repetitions, a frequency hopping mode, and a frequency domain offset between two hops.

15. The method according to claim 14, wherein
the first indication information is carried in at least one of the following manners:
downlink control information DCI;
a message Msg2; and
a message Msg4.

16. The method according to claim 15, wherein the DCI is sent in a DCI format 1_0.

17. The method according to claim 15 or 16, wherein the DCI carries the first indication information by using at least one of the following fields:
a modulation and coding scheme MCS field;
a transport block TB scaling field;
a new data indicator NDI field;
a redundancy version RV field;
a downlink assignment index DAI field; and
a reserved bits field.

18. The method according to claim 17, wherein
in a case that the first indication information indicates the number of repetitions or the counting method for the number of repetitions by using the TB scaling field, the number of repetitions or the counting method for the number of repetitions is a function of a scaling factor.

19. The method according to claim 15, wherein
the first indication information is indicated by using a random access response RAR uplink grant in the message Msg2.

20. The method according to claim 19, wherein the first indication information is carried in at least one field of the RAR uplink grant content field:
a modulation and coding scheme MCS field; and
a channel state information CSI request field.

21. The method according to any one of claims 14 to 20, wherein the method further comprises:
sending, by the network-side device, a set of candidate values for the number of repetitions and/or the frequency domain offset to the terminal, wherein the set of candidate values for the number of repetitions and/or the frequency domain offset is carried in at least one of the following manners:
radio resource control RRC signaling and system information.

22. The method according to any one of claims 14 to 20, wherein the method further comprises:
sending, by the network-side device, indication information for enabling the common PUCCH transmission with repetitions to the terminal.

23. The method according to any one of claims 14 to 20, wherein the method further comprises:
sending, by the network-side device, second indication information to the terminal, wherein the second indication information is used to indicate enabling of supporting an inter-slot frequency hopping mode for the common PUCCH transmission with repetitions.

24. An apparatus for common PUCCH transmission with repetitions, comprising:
an obtaining module, configured to obtain first indication information of common PUCCH transmission with repetitions, wherein the first indication information is used to indicate at least one of the following: the number of repetitions, a counting method for the number of repetitions, a frequency hopping mode, and a frequency domain offset between two hops; and
a processing module, configured to perform the common PUCCH transmission with repetitions based on the first indication information.

25. An apparatus for common PUCCH transmission with repetitions, comprising:
a sending module, configured to send first indication information of common PUCCH transmission with repetitions to a terminal, wherein the first indication information is used to indicate at least one of the following: the number of repetitions, a counting method for the number of repetitions, a frequency hopping mode, and a frequency domain offset between two hops.

26. A terminal, comprising a processor and a memory, wherein the memory stores a program or instructions capable of running on the processor, and when the program or instructions are executed by the processor, the steps of the method for common PUCCH transmission with repetitions according to any one of claims 1 to 13 are implemented.

27. A network-side device, comprising a processor and a memory, wherein the memory stores a program or instructions capable of running on the processor, and when the program or instructions are executed by the processor, the steps of the method for common PUCCH transmission with repetitions according to any one of claims 14 to 23 are implemented.

28. A readable storage medium, wherein the readable storage medium stores a program or instructions, and when the program or instructions are executed by a processor, the steps of the method for common PUCCH transmission with repetitions according to any one of claims 1 to 13 are implemented, or the steps of the method for common PUCCH transmission with repetitions according to any one of claims 14 to 23 are implemented.
